# EUROPEAN PATENT SPECIFICATION

(11) **EP 2 428 062 B1**
(45) Date of publication and mention of the grant of the patent: **26.06.2013**
(21) Application number: 10725966.5
(22) Date of filing: 04.05.2010
(51) Int. Cl.: H04W 36/00

(54) **METHODS AND APPARATUS TO COMBINE NEIGHBOR CELL INFORMATION OBTAINED FROM MULTIPLE SIGNALING SOURCES**
VERFAHREN UND VORRICHTUNGEN ZUM KOMBINIEREN VON AUS MEHREREN SIGNALISIERUNGSQUELLEN ERHALTENEN NACHBARZELLENINFORMATIONEN
PROCÉDÉS ET APPAREIL POUR COMBINER DES INFORMATIONS DE CELLULES VOISINES PROVENANT DE MULTIPLES SOURCES DE SIGNALISATION

(30) Priority: 04.05.2009 US 175352 P
(43) Date of publication of application: 14.03.2012
(73) Proprietor: Research In Motion Limited, Waterloo, ON N2L 3W8 (CA)
(72) Inventor: HOLE, David, Phillip, Slough Berkshire SL1 3XE (GB); WIJAYANATHAN, Maiyuran, Waterloo Ontario N2L3W8 (CA)
(74) Representative: MERH-IP Matias Erny Reichl Hoffmann
(86) International application number: PCT/EP2010/002730
(87) International publication number: WO 2010/127836

(56) References cited:
- WO-A1-99/25137
- WO-A2-2008/060236
- US-B1- 6 201 968
- "Digital cellular telecommunications system (Phase 2+); General Packet Radio Service (GPRS); Mobile Station (MS) - Base Station System (BSS) interface; Radio Link Control / Medium Access Control (RLC/MAC) protocol (3GPP TS 44.060 version 7.13.0 Release 7); ETSI TS 144 060", ETSI STANDARD, EUROPEAN TELECOMMUNICATIONS STANDARDS INSTITUTE (ETSI), SOPHIA ANTIPOLIS CEDEX, FRANCE, vol. 3-G2, no. V7.13.0, 1 July 2008 (2008-07-01), XP014042201,

## Description

### FIELD OF THE DISCLOSURE

This disclosure relates generally to mobile communication systems and, more particularly, to methods and apparatus to combine neighbor cell information obtained from multiple signaling sources.

### BACKGROUND

In many mobile communication systems, neighbor cell information is signaled to a mobile station from a current serving cell to specify how the mobile station is to measure and possibly request service from nearby neighbor cells. For example, a particular cell can utilize broadcast signaling to convey general-purpose neighbor cell information for use by some or all of the mobile stations being served by the particular cell. Additionally or alternatively, a particular cell can utilize non-broadcast signaling, such as dedicated signaling, to convey specific neighbor cell information for use by one or more specific mobile stations being served by the particular cell. Furthermore, a particular cell in a third generation partnership project (3GPP) mobile communication system, or any other type of system supporting multiple radio access technologies (RATs), may need to signal separate neighbor cell information for each of the supported RATs.

A method for combining entries from multiple neighbor cell lists to obtain an updated list for a subscriber device is described in U.S. Patent No. 6,201,968.

A method and system for controlling neighbor scanning in a subscriber unit in a cellular communications system, which employ different neighbor scan lists for different operating modes of the subscriber unit, are described in International Publication No. WO/99/25137.

Special neighbor cell lists for use in cellular radio communication systems are described in International Publication No. WO/2008/060236.

A radio link control/medium access control (RLC/MAC) protocol for the interface between a mobile station (MS) and a base station system (BSS) in a general packet radio service (GPRS) network is described in the 3rd Generation Partnership Project (3GPP) technical specification TS 44.060, version 7.13.0.

### BRIEF DESCRIPTION OF THE DRAWINGS

FIG. 1 is a block diagram of an example 3GPP communication system capable of supporting the methods and apparatus described herein.

FIG. 2 illustrates an example mobile station and example cell information that may be used to implement the 3GPP communication system of FIG. 1.

FIG. 3 illustrates a first example operation of the mobile station of FIG. 2 to process the cell information of FIG. 2.

FIG. 4 illustrates a second example operation of the mobile station of FIG. 2 to process the cell information of FIG. 2.

FIG. 5 illustrates a third example operation of the mobile station of FIG. 2 to process the cell information of FIG. 2.

FIG. 6 depicts a flowchart representative of an example process that may be performed to implement the mobile station of FIG. 2.

FIG. 7 illustrates an example base station subsystem that may be used to implement the 3GPP communication system of FIG. 1.

FIG. 8 depicts a flowchart representative of an example process that may be performed to implement the base station subsystem of FIG. 7.

FIG. 9 is a block diagram of an example processing system that may store and execute example machine readable instructions used to implement some or all of the processes of FIGS. 6 and 8 to implement the mobile station of FIG. 2, the base station subsystem of FIG. 7 or the 3GPP communication system of FIG. 1, or any combination thereof.

### DETAILED DESCRIPTION

Methods and apparatus to combine neighbor cell information obtained from multiple signaling sources are disclosed herein. An example technique to combine neighbor cell information involves obtaining first neighbor cell information corresponding to a first radio access technology (RAT), the first neighbor cell information being obtained via a broadcast signaling source. The example neighbor cell information combining technique also involves obtaining second neighbor cell information corresponding to the first RAT, the second neighbor cell information being obtained via a non-broadcast signaling source. The example neighbor cell information combining technique further involves evaluating a combination indicator obtained via the non-broadcast signaling source to determine whether to: (1) combine the first and second neighbor cell information to determine third neighbor cell information, or (2) ignore the first neighbor cell information and use the second neighbor cell information to determine the third neighbor cell information.

In an example implementation described in greater detail below, the combination indicator is asserted to indicate that the first and second neighbor cell information is to be combined to form the third neighbor cell information. For example, to perform such combining, the second neighbor cell information obtained via the non-broadcast signaling source can be prioritized over the first neighbor cell information obtained via the broadcast signaling source. In another example implementation described in greater detail below, the combination indicator is not asserted to indicate that the first neighbor cell information obtained via the broadcast signaling source is to be ignored, and the determined third neighbor cell information is to be substantially equivalent to the second neighbor cell information. In yet another example implementation, fourth neighbor cell information corresponding to a second RAT is obtained via the broadcast signaling and fifth neighbor cell information corresponding to the second RAT is obtained via the non-broadcast signaling, with a first combination indicator obtained via the non-broadcast signaling source indicating how to combine the first and second neighbor cell information, and a second combination indicator obtained via the non-broadcast signaling source indicating how to combine the fourth and fifth neighbor cell information.

As described in greater detail below, a particular example implementation of the preceding neighbor cell information combining techniques can be realized in a 3GPP communications network. In such an example implementation, the neighbor cells can correspond to global system for mobile communications (GSM) cells, enhanced data rates for GSM evolution (EDGE) cells, GSM/EDGE radio access network (GERAN) cells, universal terrestrial radio access network (UTRAN) cells, evolved UTRAN (E-UTRAN) cells, etc., or any combination thereof. Furthermore, the neighbor cell information may be in the form of allowed cell information (e.g., also referred to as whitelist information) specifying, for example, neighbor cells allowed for cell reselection, measurements, etc. Additionally or alternatively, the neighbor cell information may be in the form of not allowed cell information (also referred to as blacklist information) specifying, for example, neighbor cells not allowed for cell reselection, measurements, etc. Also, in a particular example implementation, the broadcast signaling source can correspond to point-to-multipoint signaling or point-to-point signaling, or any combination thereof, used to send common messages/information to some or all of the mobile stations in a coverage area, while the non-broadcast signaling source can correspond to dedicated signaling, such as point-to-point signaling (e.g., such as in the form of a packet measurement order message, a packet cell change order message, etc.) used to send specific messages/information to a specific target mobile station.

As described in greater detail below, the example methods and apparatus described herein can provide substantial benefits over existing techniques used to convey and process neighbor cell information. For example, many existing mobile communications systems utilize predefined, inflexible rules to specify how neighbor cell information obtained via broadcast signaling and neighbor cell information obtained via non-broadcast signaling are to be reconciled. For example, some conventional implementations are configured to always combine neighbor cell information obtained from various signaling sources in the order it is received. In some other conventional implementations, neighbor cell information from any broadcast signaling source is always discarded when any neighbor cell information is obtained from a non-broadcast signaling source.

In contrast, the example methods and apparatus described herein provide a flexible framework for combining neighbor cell information obtained from various signaling sources. For example, the methods and apparatus described herein utilize combination indicators to specify how neighbor cell information obtained via broadcast signaling is to be combined with neighbor cell information obtained via non-broadcast signaling. For example, the combination indicators can be used to specify whether the neighbor cell information obtained from both types of signaling sources is to be combined in some particular manner, or whether the neighbor cell information obtained via non-broadcast signaling is to supersede any neighbor cell information obtained via a broadcast signaling source. Additionally, the combination indicators may be adjusted through subsequent signaling to vary how neighbor cell information is to be combined. Furthermore, separate combination indicators can be used for each RAT for which neighbor cell information is provided, thereby allowing different combining rules to be used for some or all of the RATs.

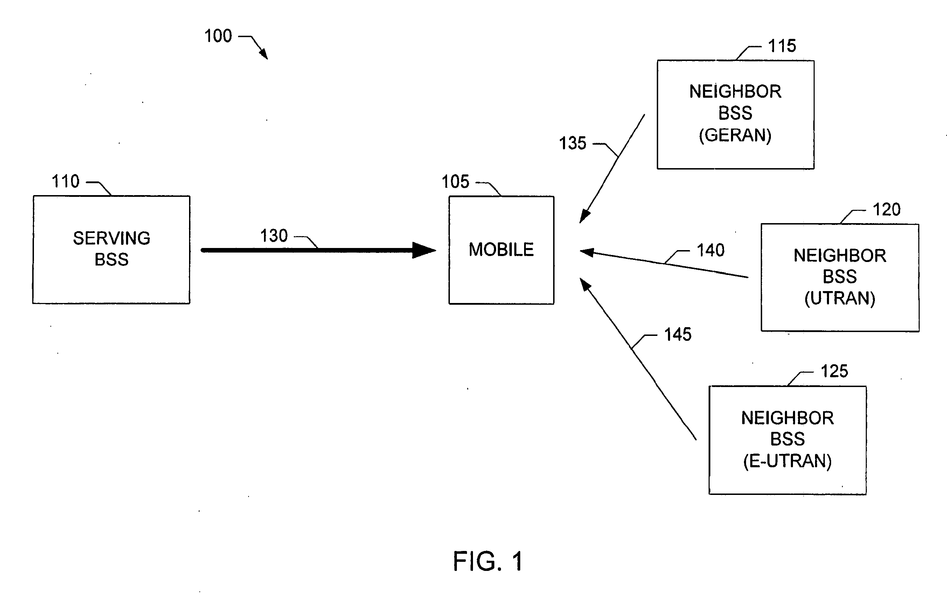

Turning to the figures, a block diagram of an example 3GPP communication system 100 capable of supporting the neighbor cell information combining techniques described herein is illustrated in FIG. 1. The communication system 100 includes an example mobile station 105 served by an example current cell 110 implemented by a first base station subsystem (BSS), which can include a first base transceiver station (BTS) and a first base station controller (BSC). Additionally, the communication system 100 includes example cells 115, 120 and 125, which are neighbor cells of the current cell 110. The neighbor cells 115, 120 and 125 are implemented by one or more BSSs different from the BSS implementing the current cell 110. As described in greater detail below, the mobile station 105 and the current cell 110 are capable of implementing the example methods and apparatus described herein to combine neighbor cell information conveyed via multiple signaling Sources.

In the communication system 100, the mobile station 105 may correspond to any type of mobile station or user endpoint equipment, such as a mobile telephone device, a fixed telephone device, a personal digital assistant (PDA), etc. Each of the cells 110-125 may correspond to any type of cell, such as a GERMAN cell, a UTRAN cell, an E-UTRAN cell, etc. Moreover, some or all of the cells 110-125 may be the same or different types of cells. For example, in FIG. 1 the neighbor cell 115 is a GERAN cell, the neighbor cell 120 is a UTRAN cell and the neighbor cell125 is an E-UTRAN cell, whereas the current cell 110 may be a GERAN cell, a UTRAN cell, an E-UTRAN cell, etc., or even a non-3GPP cell, such as a cell compliant with a code division multiple access (CDMA) standard, etc. Also, although each of the cells 110-125 is depicted as being implemented by a separate BSS, some or all of the cells 115-125 may be implemented by a common BSS. Furthermore, although only one mobile station 105 and four (4) cells 110-125 are illustrated in FIG. 1, the communication system 100 can support any number of mobile stations 105 and cells 110-125.

In the illustrated example of FIG. 1, the mobile station 105 monitors one or more downlink signals 130 transmitted by the mobile station's current cell 110. For example, the mobile station 105 monitors the downlink signal(s) 130 to receive broadcast signaling (e.g., point-to-multipoint or point-to-point signaling used to convey common messages/information) transmitted to some or all of the mobile stations being served by the current cell 110. Additionally, the mobile station 105 monitors the downlink signal(s) 130 to receive dedicated signaling (e.g., point-to-point signaling to a specific target mobile station) being transmitted from the current cell 110 to only the mobile station 105. Furthermore, the mobile station 105 monitors the downlink signal(s) 130 to evaluate the signal strength of the current cell 105 (e.g., from the perspective of the mobile station 105). As such, the downlink signal(s) 130 are represented by a thick directional line in FIG. 1 to indicate that the mobile station 105 is being served by (or, in other words, is camped on) the current cell 110.

In the illustrated example of FIG. 1, the mobile station 105 is also able to monitor one or more downlink signals 135 transmitted by the neighbor cell 115, one or more downlink signals 140 transmitted by the neighbor cell 120 and one or more downlink signals 145 transmitted by neighbor cell 125. For example, the mobile station 105 is able to monitor the downlink signals 135, 140 and 145 to evaluate the respective signal strengths of the neighbor cells 115, 120 and 125 (e.g., from the perspective of the mobile station 105). However, because the mobile station 105 is not yet being served by any of the neighbor cells 115, 120 and 125, the downlink signal(s) 135, 140 and 145 are represented by respective thin directional lines in FIG. 1.

The communication system 100 utilizes neighbor cell information conveyed from the mobile station's current cell 110 to the mobile station 105 to specify which of the neighbor cells 115, 120 and 125 are allowed for cell reselection, measurement reports, etc., or any combination thereof. As described in greater detail below, such neighbor cell information may be signaled by the current cell 110 to the mobile station 105 via broadcast signaling, non-broadcast signaling (e.g., such as dedicated signaling) or any combination thereof. Additionally, different neighbor cell information corresponding to each RAT supported by the neighbor cells 115, 120 and 125 may be signaled by the current cell 110 to the mobile station 105. Also, as described in greater detail below, such neighbor cell information signaled by the current cell 110 includes indications specifying how neighbor cell information obtained via broadcast signaling and neighbor cell information obtained via non-broadcast signaling is to be reconciled by the mobile station 105.

Although the example methods and apparatus disclosed herein are described in the context of the example 3GPP communication system 100 of FIG. 1, these example methods and apparatus can be readily adapted for use in any communication system in which neighbor cell or similar information can be conveyed using multiple signaling sources (e.g., such as a broadcast signaling source and a non-broadcast signaling source).

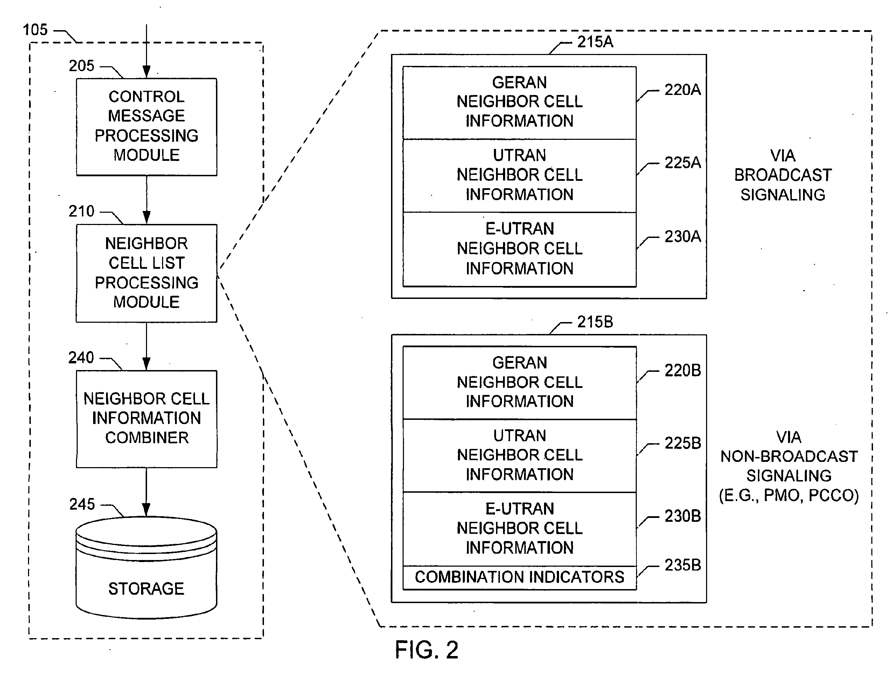

An example implementation of the mobile station 105 of FIG. 1 is illustrated in FIG. 2. The example mobile station 105 of FIG. 2 includes an example control message processing module 205 to process signaling, such as in the form of control messages, used to signal neighbor cell information from the mobile station's current serving cell (e.g., such as the current cell 110 of FIG. 1) to the mobile station 105. For example, the control message processing module 205 can be configured to receive and decode broadcast signaling, such as system information (SI) messages, packet SI (PSI) messages, etc., used to signal neighbor cell information to the mobile station 105. More generally, the broadcast signaling decoded by the control message processing module 205 can correspond to point-to-multipoint signaling or point-to-point signaling, or any combination thereof, used to send common messages/information including neighbor cell information to some or all of the mobile stations in a coverage area. Additionally or alternatively, the control message processing module 205 can be configured to receive and decode non-broadcast signaling, such as dedicated control messages in the form of packet measurement order (PMO) messages, packet cell change order (PCCO) messages, etc., used to signal neighbor cell information to the mobile station 105. The signaled neighbor cell information can include not allowed cell information (e.g., blacklist information), allowed cell information (e.g., whitelist information), or any combination thereof. Furthermore, as described in greater detail below, the signaled neighbor cell information can include separate neighbor cell information for each type of RAT supported by the neighbor cells for which information is being conveyed to the mobile station 105.

The mobile station 105 of FIG. 2 also includes an example neighbor cell list processing module 210 to obtain the neighbor cell information received and decoded by the control message processing module 205. The neighbor cell list processing module 210 is configured to use the obtained neighbor cell information to update one or more neighbor cell lists used by the mobile station 105 for cell reselection, measurement reporting, etc., or any combination thereof. For example, the neighbor cell list processing module 210 of FIG. 2 obtains the neighbor cell information in the form of one or more cell information structures 215A-B. In the illustrated example of FIG. 2, the cell information structure 215A corresponds to neighbor cell information received via broadcast signaling (e.g., such as via SI or PSI messages, or both), and the cell information structure 215B corresponds to neighbor cell information received via non-broadcast signaling (e.g., such as via PMO messages or PCCO messages, or both).

In the illustrated example of FIG. 2, the mobile station 105 supports the following RATs: GERAN, UTRAN and E-UTRAN. Accordingly, each cell information structure 215A-B includes some or all of a respective GERAN neighbor cell information field 220A-B, a respective UTRAN neighbor cell information field 225A-B and a respective E-UTRAN neighbor cell information field 230A-B. Inclusion of each of these fields is optional, with a particular field being included in the respective cell information structure 215A-B if information represented by that field is to be conveyed to recipient mobile station(s). In an example implementation, each neighbor cell information field 220A-B, 225A-B and 230A-B provides respective neighbor cell information tailored to neighbor cells implementing the particular RAT represented by the field. Such neighbor cell information can be represented in each field using operating frequencies (e.g., represented as frequency indexes, E-UTRA absolute radio frequency channel number (EARFCNs), etc.), cell identifiers (e.g., such as physical layer cell identities (designated as PCIDs or PCIs), etc., which may be specified as individual cell identifiers, ranges of cell identifiers, or any combination thereof), as well as any other information that may be used to identify neighbor cells of the particular RAT that are allowed (e.g., whitelisted) or not allowed (e.g., blacklisted), or any combination thereof.

Additionally, the non-broadcasted cell information structure 215B includes a combination indicator field 235B. In an example implementation, the combination indicator field 235B includes a separate combination indicator associated with each neighbor cell information field 220B, 225B and 230B to indicate how neighbor cell information conveyed in these fields of the non-broadcasted cell information structure 215B is to be combined with any corresponding neighbor cell information conveyed by the broadcasted cell information structure 215A. For example, a combination indicator in the combination indicator field 235B can be set to a logic-1 to indicate that the information conveyed in the GERAN neighbor cell information field 220B of the non-broadcasted cell information structure 215B is to be combined with any information conveyed in the respective GERAN neighbor cell information field 220A of the broadcast cell information structure 215A. Conversely, this same combination indicator in the combination indicator field 235B can be set to a logic-0 to indicate that the information conveyed in the GERAN neighbor cell information field 220B of the non-broadcasted cell information structure 215B is to override and replace any information conveyed in the respective GERAN neighbor cell information field 220A of the broadcast cell information structure 215A. Additionally or alternatively, similar combination indicators can be included in the combination indicator field 235B to indicate how information conveyed via the UTRAN neighbor cell information fields 225A-B is to be combined, how information conveyed via the E-UTRAN neighbor cell information fields 230A-B is to be combined, etc. In another example implementation, a single combination indicator common to some or all of the RATs could be used to specify how non-broadcasted and broadcasted neighbor cell information should be confined for those RATs.

The mobile station 105 of FIG. 2 also includes an example neighbor cell information combiner 240 to combine any neighbor cell information obtained by the neighbor cell list processing module 210 via multiple signaling sources. An example decision matrix that may be used by the cell information combiner 240 to combine neighbor cell information obtained via a broadcast signaling source and a non-broadcast signaling source is illustrated in Table 1.

**Table 1**

| **EXAMPLE DECISION MATRIX FOR NEIGHBOR CELL INFORMATION COMBINING** | | | |
|---|---|---|---|
| **Combining Indicator Value** | **Broadcasted Neighbor Cell Info Present** | **Non-Broadcasted Neighbor Cell Info Present** | **Resulting Combined Neighbor Cell Info** |
| 1 | Yes | Yes | Non-Broadcast (e.g., higher priority) + Broadcast (e.g., lower priority) |
| 1 | Yes | No | Broadcast Only |
| 1 | No | Yes | Non-Broadcast Only |
| 1 | No | No | None |
| 0 | (Don't Care) | Yes | Non-Broadcast Only |
| 0 | (Don't Care) | No | None |

As shown in Table 1, the neighbor cell information combiner 240 evaluates a combination indicator for a particular RAT to determine how to combine neighbor cell information associated with that RAT and obtained via any combination of a broadcast signaling source and a non-broadcast signaling source. For example, for a particular RAT, if the combination indicator is set to a logic-1, the neighbor cell information combiner 240 combines the neighbor cell information obtained via the non-broadcast signaling source with the neighbor cell information obtained via the broadcast signaling source using any appropriate combining rule(s). For example, the neighbor cell information combiner 240 can combine the neighbor cell information by prioritizing information obtained via non-broadcast signaling over information obtained via broadcast signaling, or the neighbor cell information combiner 240 can combine neighbor cell information in the order it is received, etc., or any combination thereof. Additionally, if the combination indicator is set to a logic-1, but the non-broadcasted neighbor cell information is empty or absent, the neighbor cell information combiner 240 can use the broadcasted neighbor cell information for that RAT as the combined information. However, if the combination indicator is set to a logic-0, the neighbor cell information combiner 240 ignores any broadcasted neighbor cell information for that RAT in favor of that RAT's non-broadcasted cell information. In other words, if a combination indicator is set to a logic-0, the non-broadcasted neighbor cell information for that RAT supersedes and replaces any broadcasted neighbor cell information for that RAT.

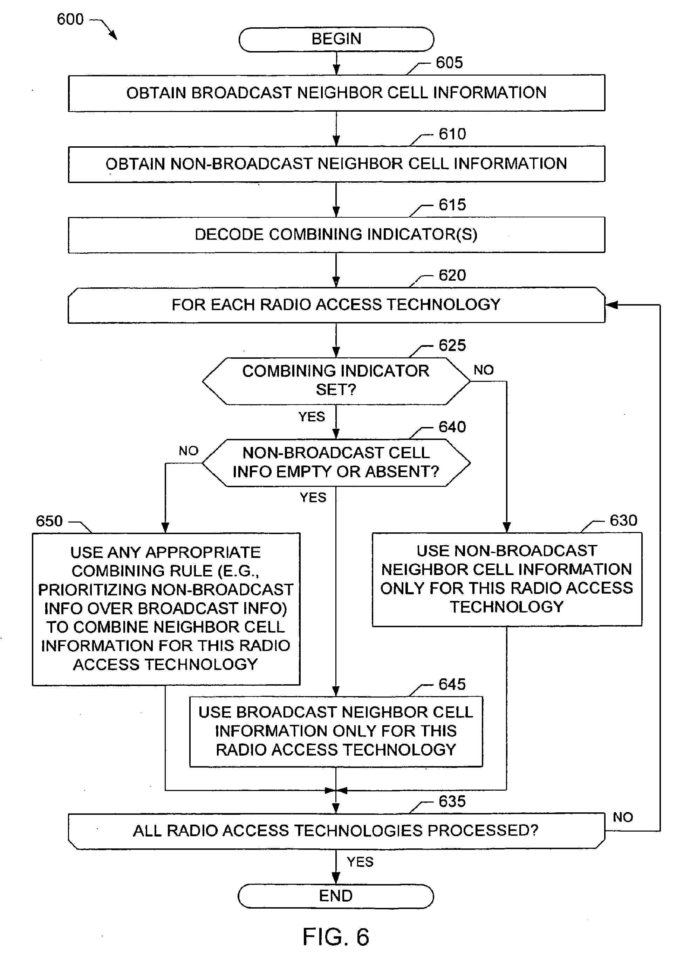

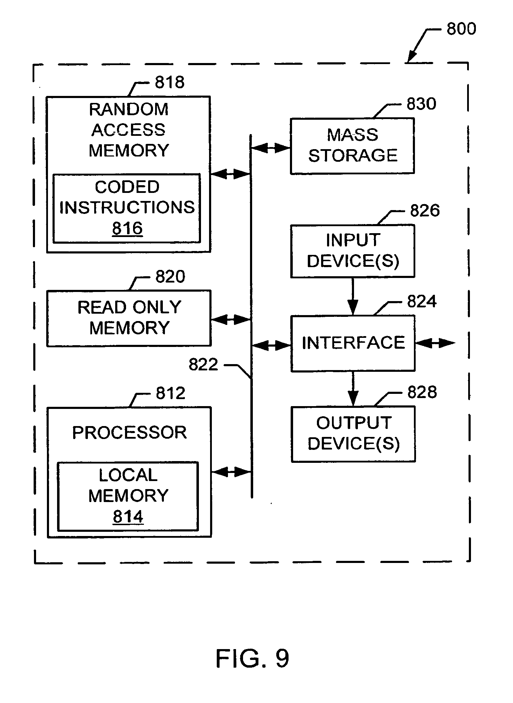

The example mobile station 105 further includes an example storage unit 245 to store the combined neighbor cell information determined by the neighbor cell information combiner 240. The storage unit 245 may be implemented by any type of storage or memory technology, such as the volatile memory 818 or the mass storage device 830, or both, included in the example processing system 800 of FIG. 9, which is described in greater detail below. An example procedure that may be used to implement the mobile station 105 of FIG. 2 is illustrated in FIG. 6 and discussed in greater detail below.

While an example manner of implementing the example mobile station 105 of FIG. 1 has been illustrated in FIG. 2, one or more of the elements, processes and/or devices illustrated in FIG. 2 may be combined, divided, re-arranged, omitted, eliminated and/or implemented in any other way. Further, the example control message processing module 205, the example neighbor cell list processing module 210, the example neighbor cell information combiner 240, the example storage unit 245 and/or, more generally, the example mobile station 105 of FIG. 2 may be implemented by hardware, software, firmware and/or any combination of hardware, software and/or firmware. Thus, for example, any of the example control message processing module 205, the example neighbor cell list processing module 210, the example cell information combiner 240, the example storage unit 245 and/or, more generally, the example mobile station 105 could be implemented by one or more circuit(s), programmable processor(s) executing software or firmware instructions, application specific integrated circuit(s) (ASIC(s)), programmable logic device(s) (PLD(s)) and/or field programmable logic device(s) (FPLD(s)), etc. When any of the appended claims are read to cover a purely software and/or firmware implementation, at least one of the example mobile station 105, the example control message processing module 205, the example neighbor cell list processing module 210, the example cell information combiner 240 and/or the example storage unit 245 are hereby expressly defined to include a tangible medium such as a memory, digital versatile disk (DVD), compact disk (CD), etc., storing such software and/or firmware. Further still, the example mobile station 105 of FIG. 2 may include one or more elements, processes and/or devices in addition to, or instead of, those illustrated in FIG. 2, and/or may include more than one of any or all of the illustrated elements, processes and devices.

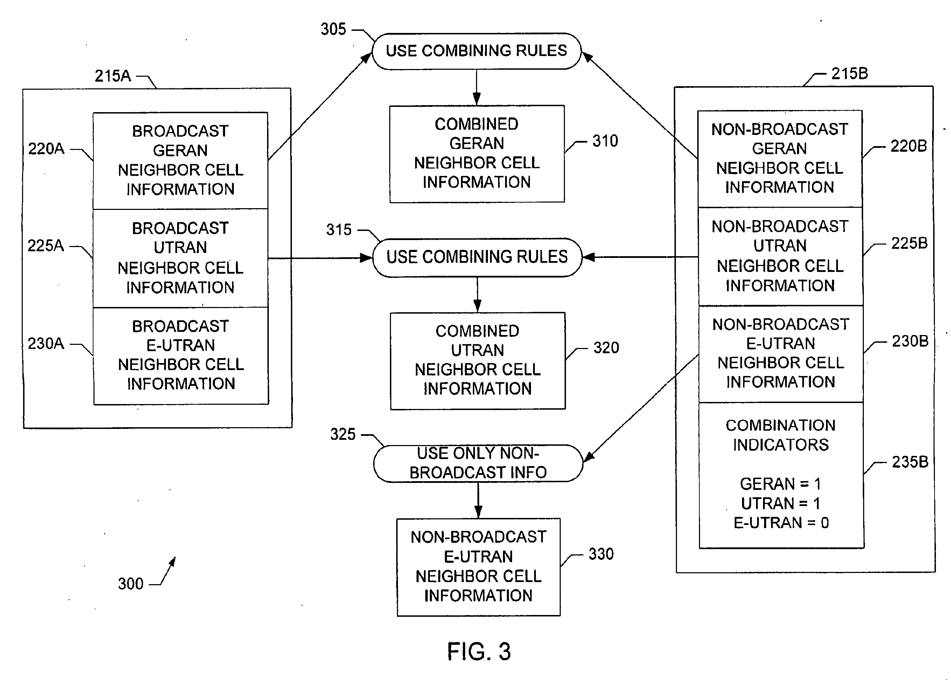

A first example neighbor cell information combining operation 300 performed by the mobile station 105 of FIGS. 1 or 2, or both, is illustrated in FIG. 3. In the illustrated example of FIG. 3, the mobile station 105 obtains broadcasted neighbor cell information (e.g., via SI message(s), PSI message(s), etc.) in the form of the cell information structure 215A. In the example of FIG. 3, the GERAN neighbor cell information field 220A, the UTRAN neighbor cell information field 225A and the E-UTRAN neighbor cell information field 230A are all present (and not empty) in the broadcasted cell information structure 215A. Additionally, the mobile station 105 obtains non-broadcasted neighbor cell information (e.g., via PMO message(s), PCCO message(s), etc.) in the form of the cell information structure 215B. In the example of FIG. 3, the GERAN neighbor cell information field 220B, the UTRAN neighbor cell information field 225B and the E-UTRAN neighbor cell information field 230B are all present (and not empty) in the non-broadcasted cell information structure 215B. Furthermore, the combination indicator field 235B in non-broadcasted cell information structure 215B includes a combination indicator for each RAT represented in the non-broadcasted cell information structure 215B. In particular, the combination indicator field 235B includes a GERAN combination indicator, a UTRAN combination indicator and an E-UTRAN combination indicator.

Utilizing the decision matrix of Table 1, because the GERAN combination indicator is set to a logic-1, the mobile station 105 uses any appropriate combining rules (depicted as block 305) to combine the information included in the broadcasted and non-broadcasted GERAN neighbor cell information fields 220A-B to determine combined GERAN neighbor cell information 310. Similarly, because the UTRAN combination indicator is set to a logic-1, the mobile station 105 uses any appropriate combining rules (depicted as block 315) to combine the information included in the broadcasted and non-broadcasted UTRAN neighbor cell information fields 225A-B to determine combined UTRAN neighbor cell information 320. However, because the E-UTRAN combination indicator is set a logic-0, the mobile station 105 uses only the information included in the non-broadcasted E-UTRAN neighbor cell information field 230B (depicted as block 325) to determine that the overall E-UTRAN neighbor cell information 330 is to correspond to only the non-broadcasted E-UTRAN neighbor cell information (in other words, the broadcasted E-UTRAN neighbor cell information is effectively ignored). As described above, the combining rules 305 and 315 can be any combining rules, such as rules prioritizing non-broadcasted neighbor cell information over broadcasted neighbor cell information, or selecting neighbor cell information in the order it is received, etc., or any combination thereof.

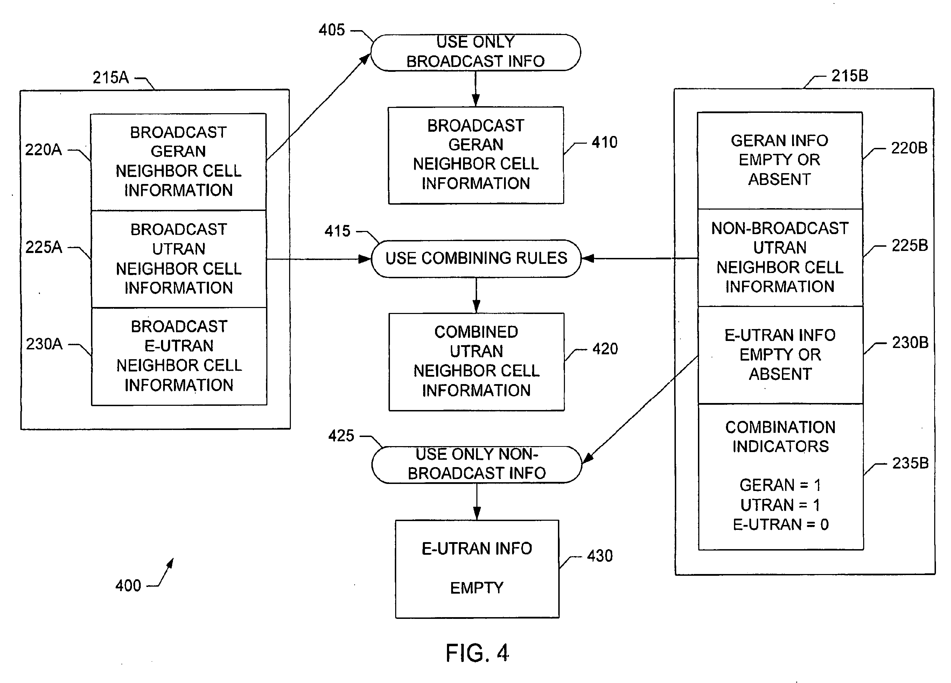

A second example neighbor cell information combining operation 400 performed by the mobile station 105 of FIGS. 1 or 2, or both, is illustrated in FIG. 4. In the illustrated example of FIG. 4, the mobile station 105 obtains broadcasted neighbor cell information (e.g., via SI message(s), PSI message(s), etc.) in the form of the cell information structure 215A. In the example of FIG. 4, the GERAN neighbor cell information field 220A, the UTRAN neighbor cell information field 225A and the E-UTRAN neighbor cell information field 230A are all present (and not empty) in the broadcasted cell information structure 215A. Additionally, the mobile station 105 obtains non-broadcasted neighbor cell information (e.g., via PMO message(s), PCCO message(s), etc.) in the form of the cell information structure 215B. In the example of FIG. 4, the GERAN neighbor cell information field 220B and the E-UTRAN neighbor cell information field 230B in the non-broadcasted cell information structure 215B are absent or present but empty, whereas the UTRAN neighbor cell information field 225B in the non-broadcasted cell information structure 215B is present (and not empty). Furthermore, the combination indicator field 235B in non-broadcasted cell information structure 215B includes a combination indicator for each RAT represented in the non-broadcasted cell information structure 215B. In particular, the combination indicator field 235B includes a GERAN combination indicator, a UTRAN combination indicator and an E-UTRAN combination indicator.

Utilizing the decision matrix of Table 1, because the GERAN combination indicator is set to a logic-1 but the GERAN neighbor cell information field 220B is absent or present but empty, the mobile station 105 uses only the information included in the broadcasted GERAN neighbor cell information field 220A (depicted as block 405) to determine that the overall GERAN neighbor cell information 410 is to correspond to only the broadcasted GERAN neighbor cell information. Next, because the UTRAN combination indicator is set to a logic-1, the mobile station 105 uses any appropriate combining rules (depicted as block 415) to combine the information included in the broadcasted and non-broadcasted UTRAN neighbor cell information fields 225A-B to determine combined UTRAN neighbor cell information 420. However, because the E-UTRAN combination indicator is set a logic-0, the mobile station 105 uses only the information included in the non-broadcasted E-UTRAN neighbor cell information field 230B (depicted as block 425) to determine that the overall E-UTRAN neighbor cell information 430 is to correspond to only non-broadcasted E-UTRAN neighbor cell information (in other words, the broadcasted E-UTRAN neighbor cell information is effectively ignored). Furthermore, because the non-broadcasted E-UTRAN neighbor cell information field 230B is absent or present but empty, the overall E-UTRAN neighbor cell information 430 is also determined to be empty. As described above, the combining rules 415 can be any combining rules, such as rules prioritizing non-broadcasted neighbor cell information over broadcasted neighbor cell information, or selecting neighbor cell information in the order it is received, etc., or any combination thereof.

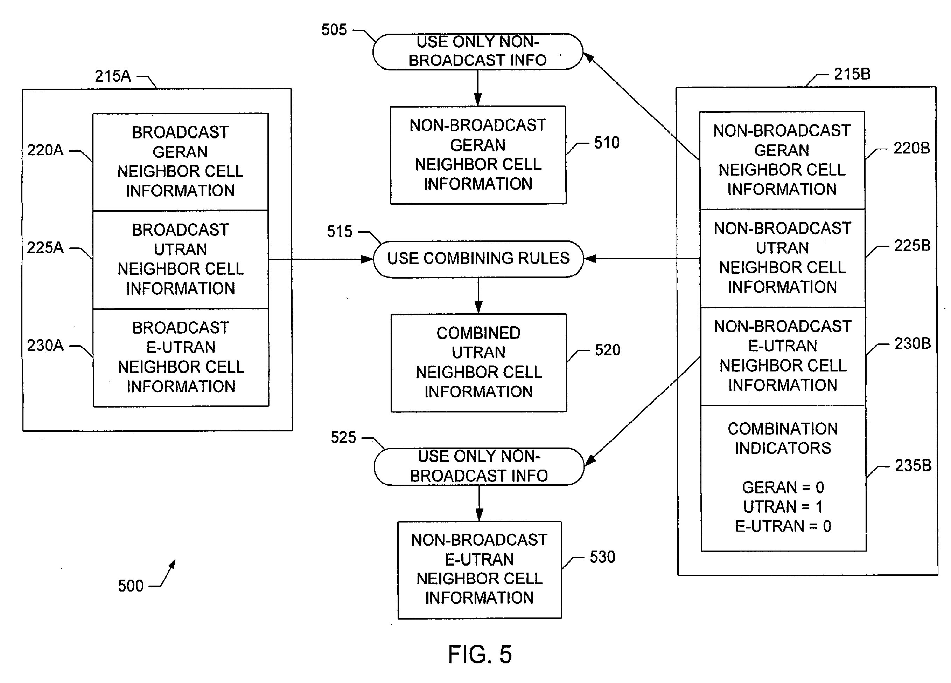

A third example neighbor cell information combining operation 500 performed by the mobile station 105 of FIGS. 1 or 2, or both, is illustrated in FIG. 5. In the illustrated example of FIG. 5, the mobile station 105 obtains broadcasted neighbor cell information (e.g., via SI message(s), PSI message(s), etc.) in the form of the cell information structure 215A. In the example of FIG. 5, the GERAN neighbor cell information field 220A, the UTRAN neighbor cell information field 225A and the E-UTRAN neighbor cell information field 230A are all present (and not empty) in the broadcasted cell information structure 215A. Additionally, the mobile station 105 obtains non-broadcasted neighbor cell information (e.g., via PMO message(s), PCCO message(s), etc.) in the form of the cell information structure 215B. In the example of FIG. 5, the GERAN neighbor cell information field 220B, the UTRAN neighbor cell information field 225B and the E-UTRAN neighbor cell information field 230B are all present (and not empty) in the non-broadcasted cell information structure 215B. Furthermore, the combination indicator field 235B in non-broadcasted cell information structure 215B includes a combination indicator for each RAT represented in the non-broadcasted cell information structure 215B. In particular, the combination indicator field 235B includes a GERAN combination indicator, a UTRAN combination indicator and an E-UTRAN combination indicator.

Utilizing the decision matrix of Table 1, because the GERAN combination indicator is set to a logic-0, the mobile station 105 uses only the information included in the non-broadcasted GERAN neighbor cell information field 220B (depicted as block 505) to determine that the overall GERAN neighbor cell information 510 is to correspond to only the non-broadcasted GERAN neighbor cell information (in other words, the broadcasted GERAN neighbor cell information is effectively ignored). Conversely, because the UTRAN combination indicator is set to a logic-1, the mobile station 105 uses any appropriate combining rules (depicted as block 515) to combine the information included in the broadcasted and non-broadcasted UTRAN neighbor cell information fields 225A-B to determine combined UTRAN neighbor cell information 520. However, because the E-UTRAN combination indicator is set a logic-0, the mobile station 105 uses only the information included in the non-broadcasted E-UTRAN neighbor cell information field 230B (depicted as block 525) to determine that the overall E-UTRAN neighbor cell information 530 is to correspond to only the non-broadcasted E-UTRAN neighbor cell information (in other words, the broadcasted E-UTRAN neighbor cell information is effectively ignored). As described above, the combining rules 515 can be any combining rules, such as rules prioritizing non-broadcasted neighbor cell information over broadcasted neighbor cell information, or selecting neighbor cell information in the order it is received, etc., or any combination thereof.

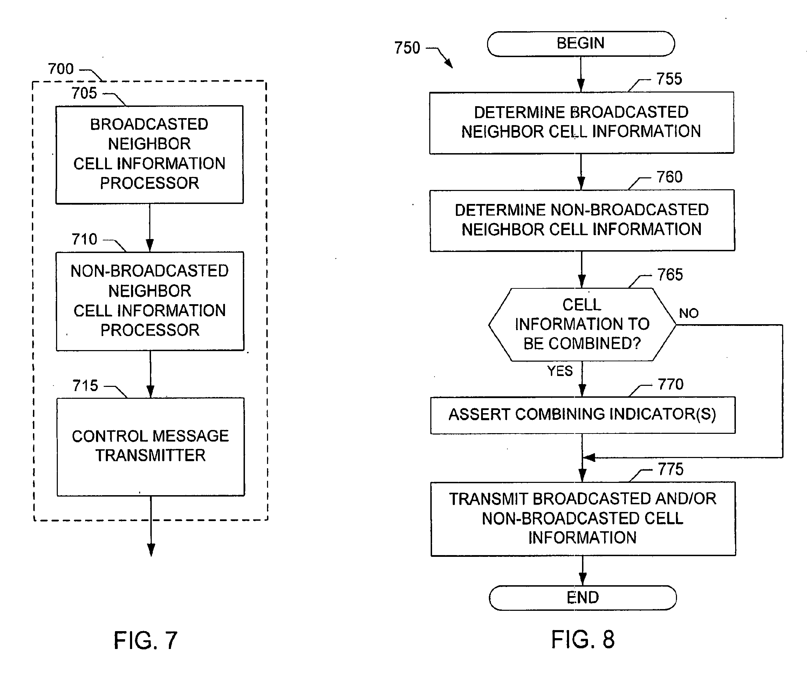

Flowcharts representative of example processes that may be executed to implement any, some or all of the example 3GPP communication system 100, the example mobile station 105, the example current cell 110, the example control message processing module 205, the example neighbor cell list processing module 210, the example cell information combiner 240 and the example storage unit 245, as well as the example BSS 700, the example broadcasted neighbor cell information processor 705, the example non-broadcasted neighbor cell information processor 710 and the example control message transmitter 715 of FIG. 7 and described in greater detail below, are shown in FIGS. 6 and 8.

In these examples, the processes represented by the flowcharts may be implemented by one or more programs comprising machine readable instructions for execution by: (a) a processor, such as the processor 812 shown in the example processing system 800 discussed below in connection with FIG. 9, (b) a controller, and/or (c) any other suitable device. The one or more programs may be embodied in software stored on a tangible medium such as, for example, a flash memory, a CD-ROM, a floppy disk, a hard drive, a DVD, or a memory associated with the processor 812, but the entire program or programs and/or portions thereof could alternatively be executed by a device other than the processor 812 and/or embodied in firmware or dedicated hardware (e.g., implemented by an application specific integrated circuit (ASIC), a programmable logic device (PLD), a field programmable logic device (FPLD), discrete logic, etc.). For example, any one, some or all of the example 3GPP communication system 100, the example mobile station 105, the example current cell 110, the example control message processing module 205, the example neighbor cell list processing module 210, the example cell information combiner 240, the example storage unit 245, the example BSS 700, the example broadcasted neighbor cell information processor 705, the example non-broadcasted neighbor cell information processor 710 and the example control message transmitter 715 could be implemented by any combination of software, hardware, and/or firmware. Also, any, some or all of the process represented by the flowcharts of FIGS. 6 and 8 may be implemented manually.

Further, although the example processes are described with reference to the flowcharts illustrated in FIGS. 6 and 8, many other techniques for implementing the example methods and apparatus described herein may alternatively be used. For example, with reference to the flowcharts illustrated in FIGS. 6 and 8, the order of execution of the blocks may be changed, and/or some of the blocks described may be changed, eliminated, combined and/or subdivided into multiple blocks.

An example process 600 that may be executed to implement neighbor cell information combining in the example mobile station 105 of FIGS. 1 or 2, or both, is illustrated in FIG. 6. The process 600 may be executed at predetermined intervals (e.g., such as at specified neighbor cell measurement intervals), based on an occurrence of a predetermined event (e.g., such as reception of broadcast signaling providing neighbor cell information, reception of non-broadcast signaling providing neighbor cell information, etc.), as a background process, etc., or any combination thereof. With reference to FIGS. 1 and 2, the process 600 begins execution at block 605 at which the neighbor cell list processing module 210 included in the mobile station 105 obtains neighbor cell information via broadcast signaling (e.g., such as via SI message(s), PSI message(s), etc.). For example, at block 605 the neighbor cell list processing module 210 obtains the neighbor cell information in the form of one or more broadcasted cell information structures 215A decoded from received broadcast signaling by the control message processing module 205 included in the mobile station 105. The broadcasted neighbor cell information obtained at block 605 can include information for neighbor cells supporting GERAN, UTRAN, E-UTRAN, etc., or any other RAT, as well as any combination of such RATs.

Next, control proceeds to block 610 at which the neighbor cell list processing module 210 obtains neighbor cell information via non-broadcast signaling (e.g., such as via PMO message(s), PCCO message(s), etc.). For example, at block 610 the neighbor cell list processing module 210 obtains the neighbor cell information in the form of one or more non-broadcasted cell information structures 215B decoded from received non-broadcast (e.g., dedicated) signaling by the control message processing module 205 included in the mobile station 105. The non-broadcasted neighbor cell information obtained at block 610 can include information for neighbor cells supporting GERAN, UTRAN, E-UTRAN, etc., or any other RAT, as well as any combination of such RATs. Then, at block 615 the neighbor cell list processing module 210 decodes any combination indicators included with the non-broadcasted neighbor cell information obtained at block 610. For example, at block 615 the neighbor cell list processing module 210 decodes a combination indicator for each RAT represented by the non-broadcasted neighbor cell information obtained at block 610. Control then proceeds to block 620.

At block 620, the neighbor cell information combiner 240 included in the mobile station 105 begins iterating through each RAT represented by the neighbor cell information and combination indicators obtained at blocks 605-615. For a particular RAT, control proceeds to block 625 at which the neighbor cell information combiner 240 determines whether the combination indicator for the particular RAT is set to a logic-1. If the combination indicator is not set (block 625), control proceeds to block 630 at which the neighbor cell information combiner 240 ignores any broadcasted neighbor cell information obtained at block 605 for the particular RAT in favor of non-broadcasted cell information obtained at block 610 for the RAT. In other words, at block 630 the non-broadcasted neighbor cell information obtained for the particular RAT supersedes and replaces any broadcasted neighbor cell information for that RAT. Control then proceeds to block 635.

However, if the combination indicator for the particular RAT is not set (block 625), control proceeds to block 640 at which the neighbor cell information combiner 240 determines whether the non-broadcasted neighbor cell information for the RAT is absent or present but empty. If the non-broadcasted neighbor cell information for the RAT is absent or present but empty (block 640), control proceeds to block 645 at which the neighbor cell information combiner 240 uses the broadcasted neighbor cell information obtained at block 605 for the particular RAT as the overall neighbor cell information for the RAT. Control then proceeds to block 635.

If, however, the non-broadcast neighbor cell information for the RAT is not absent and is not present but empty or, in other words, such information is present and not empty (block 640), control proceeds to block 650. At block 650, the neighbor cell information combiner 240 combines the broadcasted neighbor cell information obtained at block 605 for the RAT with the non-broadcasted neighbor cell information obtained at block 610 for the RAT using any appropriate combining rule(s). For example, at block 650 the neighbor cell information combiner 240 can combine the neighbor cell information by prioritizing information obtained via non-broadcast signaling over information obtained via broadcast signaling, or the neighbor cell information combiner 240 can combine neighbor cell information in the order it is received, etc., or any combination thereof. Control then proceeds to block 635.

At block 635, the neighbor cell information combiner 240 determines whether each RAT represented by the neighbor cell information and combination indicators obtained at blocks 605-615 has been processed. If all RATs have not been processed (block 635), control returns to block 620 and blocks subsequent thereto at which the neighbor cell information combiner 240 begins processing the neighbor cell information for another RAT. However, if all RATs have been processed (block 635), execution of the example process 600 ends.

An example BSS 700 that may be used to implement the current cell 110 of FIG. 1 is illustrated in FIG. 7. The example BSS 700 includes an example broadcasted neighbor cell information processor 705, an example non-broadcasted neighbor cell information processor 710 and an example control message transmitter 715. In an example implementation, some or all of the broadcasted neighbor cell information processor 705, the example non-broadcasted neighbor cell information processor 710 and the example control message transmitter 715 could be implemented by a BSC included in the BSS 700. An example process 750 that may be executed to implement the BSS 700 and, in particular, the broadcasted neighbor cell information processor 705, the non-broadcasted neighbor cell information processor 710 and the control message transmitter 715 is illustrated in FIG. 8. The process 750 may be executed whenever the BSS 700 is to prepare and transmit neighbor cell information via broadcast signaling, non-broadcast signaling, or any combination thereof.

With reference to FIGS. 2 and 7, the process 750 of FIG. 8 begins execution at block 755 at which the broadcasted neighbor cell information processor 705 included in the BSS 700 determines neighbor cell information for each supported RAT and that is to be conveyed via broadcast signaling (e.g., such as via SI message(s), PSI message(s), etc.). For example, at block 755 the broadcasted neighbor cell information processor 705 determines the neighbor cell information to be included in any, some or all of the GERAN neighbor cell information field 220A, the UTRAN neighbor cell information field 225A and the E-UTRAN neighbor cell information field 230A of the broadcasted cell information structure 215A.

Next, control proceeds to block 760 at which the non-broadcasted neighbor cell information processor 710 included in the BSS 700 determines neighbor cell information for each supported RAT and that is to be conveyed via non-broadcast signaling (e.g., such as via PMO message(s), PCCO message(s), etc.). For example, at block 760 the non-broadcasted neighbor cell information processor 710 determines the neighbor cell information to be included in any, some or all of the GERAN neighbor cell information field 220B, the UTRAN neighbor cell information field 225B and the E-UTRAN neighbor cell information field 230B of the non-broadcasted cell information structure 215B.

Next, control proceeds to block 765 at which the non-broadcasted neighbor cell information processor 710 determines whether the non-broadcasted neighbor cell information for any RAT is to be indicated as being combinable with corresponding broadcasted neighbor cell information for that RAT. If the non-broadcasted and broadcasted neighbor cell information for any RAT is so combinable (block 765), control proceeds to block 770 at which the non-broadcasted neighbor cell information processor 710 asserts the combination indicator associated with any RAT for which non-broadcasted neighbor cell information is to be indicated as being combinable with corresponding broadcasted neighbor cell information.

Control then proceeds to block 775 at which the control message transmitter 715 included in the BSS 700 transmits any broadcasted neighbor cell information or non-broadcasted neighbor cell information, or both, using an appropriate combination of broadcast and non-broadcast signaling. After processing at block 775 completes, execution of the example process 750 ends.

While an example manner of implementing the example BSS 700 has been illustrated in FIG. 7, one or more of the elements, processes and/or devices illustrated in FIG. 7 may be combined, divided, re-arranged, omitted, eliminated and/or implemented in any other way. Further, the example broadcasted neighbor cell information processor 705, the example non-broadcasted neighbor cell information processor 710, the example control message transmitter 715 and/or, more generally, the example BSS 700 of FIG. 7 may be implemented by hardware, software, firmware and/or any combination of hardware, software and/or firmware. Thus, for example, any of the example broadcasted neighbor cell information processor 705, the example non-broadcasted neighbor cell information processor 710, the example control message transmitter 715 and/or, more generally, the example BSS 700 could be implemented by one or more circuit(s), programmable processor(s) executing software or firmware instructions, application specific integrated circuit(s) (ASIC(s)), programmable logic device(s) (PLD(s)) and/or field programmable logic device(s) (FPLD(s)), etc. When any of the appended claims are read to cover a purely software and/or firmware implementation, at least one of the example BSS 700, the example broadcasted neighbor cell information processor 705, the example non-broadcasted neighbor cell information processor 710 and/or the example control message transmitter 715 are hereby expressly defined to include a tangible medium such as a memory, digital versatile disk (DVD), compact disk (CD), etc., storing such software and/or firmware. Further still, the example BSS 700 of FIG. 7 may include one or more elements, processes and/or devices in addition to, or instead of, those illustrated in FIG. 7, and/or may include more than one of any or all of the illustrated elements, processes and devices.

As yet another example, the neighbor cell information combining techniques described herein can be implemented in the 3GPP communication system 100 of FIG. 1 upon adoption of the following example modifications to certain 3GPP standards (although adoption of the following standard modifications may not be required to implement the example cell reselection and measurement reporting techniques described herein in a 3GPP system). An example modification to 3GPP TS 44.060 (v8.4.0, February 2009) to support the neighbor cell information combining techniques described herein would be to redefine the E-UTRAN Measurement Parameters Description structure as shown in Table 2. Additionally, the following definition of the MERGE_E-UTRAN_NCL field could be added to 3GPP TS 44.060: "Definition of MERGE_E-UTRAN_NCL (1 bit field) - If this field is set to '1', then the E-UTRAN neighbour cell information provided in this message shall be merged with that received in system information messages, see sub-clause 5.6.3.1a. If this field is set to '0' then only the E-UTRAN neighbour cell information (if any) received in this message shall be used."

**Table 2**

| **Example Structures** | | |
|---|---|---|
| < E-UTRAN Measurement Parameters Description struct > ::= | | |
| | < **E-UTRAN_BA_IND :** bit > | |
| | < **E-UTRAN_CCN_ACTIVE** : bit > | |
| | < **MERGE_E-UTRAN_NCL** : bit > | |
| | < **Qsearch_P_E-UTRAN** : bit(2) > | |
| | { 0 \| 1 < **E-UTRAN_MULTIRAT_REPORTING** : bit(2) > } < **E-UTRAN_REP_QUANT** : bit > | |
| | { 0 \| 1 < **E-UTRAN_FDD_REPORTINGI_THRESHOLD** : bit(3) > | |
| | | { 0 \| 1 < **E-UTRAN_FDD_REPORTING_THRESHOLD_2** : bit(6) > }} |
| | {0 \| 1 < **E-UTRAN_TDD_REPORTING_THRESHOLD** : bit(3) > | |
| | | { 0 \| 1 < **E-UTRAN_TDD_REPORTING_THRESHOLD_2** : bit(6) > } |
| | { 1 < **Repeated E-UTRAN Neighbour Cells** : < Repeated E-UTRAN Neighbour Cells struct >> } ** 0 | |
| | { 1 < **Repeated E-UTRAN Not Allowed Cells** : < Repeated E-UTRAN Not Allowed Cells struct >> } ** 0 ; | |

A further modification to 3GPP TS 44.060 to support the neighbor cell information combining techniques described herein would be to include the following text in section 5.6.3.1a: "The E-UTRAN Neighbour cell list may be modified by a PACKET CELL CHANGE ORDER message (in which case the reference list is given on the new cell) or by one or more instances of the PACKET MEASUREMENT ORDER message with the same E-UTRAN_BA_IND value or PSI3_CHANGE_MARK value. If the MERG_E-UTRAN_NCL bit in the PACKET MEASUREMENT ORDER is set to '1', then the frequencies described by the Repeated E-UTRAN Neighbour Cell IEs are added to the E-UTRAN Neighbour Cell list in the following order: (1) those included within an instance of SI2quater (respectively PSI3quater), in order of the SI2quater_INDEX value (respectively PSI3_QUATER_ INDEX) of the instance in which they appear, and then in the order in which the EARFCNs are listed within an instance; followed by (2) those (if any) included within an instance of a Packet Measurement Order message, in order of the PMO_INDEX value of the instance in which they appear and then in the order in which the EARFCNs are listed within an instance. Any EARFCN which appears more than once shall be added to the E-UTRAN Neighbour Cell list only once, in the lowest-numbered position applicable. If the MERGE_E-UTRAN_NCL bit in the PACKET MEASUREMENT ORDER is set to '0', then the E-UTRAN neighbour cell list shall be constructed using only instances of the Repeated E-UTRAN Neighbour Cell IEs received within PACKET MEASUREMENT ORDER messages (in the same order as described above). If, in this case, no Repeated E-UTRAN Neighbour Cell IEs are included in the PACKET MEASUREMENT ORDER message, then the mobile shall not perform measurements of or reselection to any E-UTRAN cell. In case the same parameter (e.g. Measurement Bandwidth, Not Allowed Cells including any instance of the Not Allowed Cells structure which identifies no cells) is specified more than once for the same EARFCN, the parameter received in the message instance with highest precedence shall apply, where message instance precedence is ranked as follows (in descending order): (1) instances of Packet Measurement Order (in decreasing order of PMO INDEX value); (2) instances of SI2quater (respectively PSI3quater), in decreasing order of SI2quater_INDEX value (respectively PSI3_QUATER_INDEX). Within the same instance of a message, a parameter listed later in the message has higher precedence than one appearing earlier in the message."

FIG. 9 is a block diagram of an example processing system 800 capable of implementing the apparatus and methods disclosed herein. The processing system 800 can correspond to, for example, a mobile station processing platform, a network element processing platform, a server, a personal computer, a personal digital assistant (PDA), an Internet appliance, a mobile phone, or any other type of computing device.

The system 800 of the instant example includes a processor 812 such as a general purpose programmable processor, an embedded processor, a microcontroller, etc. The processor 812 includes a local memory 814, and executes coded instructions 816 present in the local memory 814 and/or in another memory device. The processor 812 may execute, among other things, machine readable instructions to implement the processes represented in FIGS. 6 and 8. The processor 812 may be any type of processing unit, such as one or more microprocessors from the Intel® Centrino® family of microprocessors, the Intel® Pentiume® family of microprocessors, the Intel® Itanium® family of microprocessors, and/or the Intel® XScale® family of processors, one or more microcontrollers from the ARM® family of microcontrollers, the PIC® family of microcontrollers, etc. Of course, other processors from other families are also appropriate.

The processor 812 is in communication with a main memory including a volatile memory 818 and a non-volatile memory 820 via a bus 822. The volatile memory 818 may be implemented by Static Random Access Memory (SRAM), Synchronous Dynamic Random Access Memory (SDRAM), Dynamic Random Access Memory (DRAM), RAMBUS Dynamic Random Access Memory (RDRAM) and/or any other type of random access memory device. The non-volatile memory 820 may be implemented by flash memory and/or any other desired type of memory device. Access to the main memory 818, 820 is typically controlled by a memory controller (not shown).

The computer 800 also includes an interface circuit 824. The interface circuit 824 may be implemented by any type of interface standard, such as an Ethernet interface, a universal serial bus (USB), and/or a third generation input/output (3GIO) interface.

One or more input devices 826 are connected to the interface circuit 824. The input device(s) 826 permit a user to enter data and commands into the processor 812. The input device(s) can be implemented by, for example, a keyboard, a mouse, a touchscreen, a track-pad, a trackball, an isopoint and/or a voice recognition system.

One or more output devices 828 are also connected to the interface circuit 824. The output devices 828 can be implemented, for example, by display devices (e.g., a liquid crystal display, a cathode ray tube display (CRT)), by a printer and/or by speakers. The interface circuit 824, thus, typically includes a graphics driver card.

The interface circuit 824 also includes a communication device such as a modem or network interface card to facilitate exchange of data with external computers via a network (e.g., an Ethernet connection, a digital subscriber line (DSL), a telephone line, coaxial cable, a cellular telephone system such as an EGPRS-compliant system, etc.).

The computer 800 also includes one or more mass storage devices 830 for storing software and data. Examples of such mass storage devices 830 include floppy disk drives, hard drive disks, compact disk drives and digital versatile disk (DVD) drives. The mass storage device 830 may implement the storage unit 245. Additionally or alternatively, the volatile memory 818 may implement the storage unit 245.

As an alternative to implementing the methods and/or apparatus described herein in a system such as the device of FIG. 9, the methods and or apparatus described herein may be embedded in a structure such as a processor and/or an ASIC (application specific integrated circuit).

Finally, although certain example methods, apparatus and articles of manufacture have been described herein, the scope of coverage of this patent is not limited thereto.

## Claims

1. A method in a wireless device (105) comprising:
receiving first neighbor cell information (220A, 225A, 230A) via broadcast signaling from a serving cell (110);
receiving second neighbor cell information (220B, 225B, 230B) via non-broadcast signaling from the same serving cell (110);
receiving an indicator (235B) indicating whether to (1) use the first and second neighbor cell information (220A-B, 225A-B, 230A-B), or (2) use the second neighbor cell information (220B, 225B, 230B) but not the first neighbor cell information (220A, 225A, 230A); and
utilizing at least one of the first or second neighbor cell information (220A-B, 225A-B, 230A-B) in accordance with the indicator (235B).

2. A method as defined in claim 1 wherein the indicator (235B) is received via the non-broadcast signaling.

3. A method as defined in claim 1 or 2 wherein the indicator (235B) indicates whether to (1) combine the first and second neighbor cell information (220A-B, 225A-B, 230A-B), or (2) use the second neighbor cell information (220B, 225B, 230B) but not the first neighbor cell information (220A, 225A, 230A).

4. A method as defined in claim 3 wherein utilizing at least one of the first or second neighbor cell information (220A-B, 225A-B, 230A-B) in accordance with the indicator (235B) comprises:
combining the first and second neighbor cell information (220A-B, 225A-B, 230A-B) when the indicator (235B) indicates to combine the first and second neighbor cell information (220A-B, 225A-B, 230A-B); and
utilizing the second neighbor cell information (220B, 225B, 230B) but not the first neighbor cell information when the indicator (235B) indicates to use the second neighbor cell information (220B, 225B, 230B) but not the first neighbor cell information (220A, 225A, 230A).

5. A method as defined in claim 4 wherein combining the first and second neighbor cell information (220A-B, 225A-B, 230A-B) comprises prioritizing the second neighbor cell information (220B, 225B, 230B) received via the non-broadcast signaling over the first neighbor cell information (220A, 225A, 230A) received via the broadcast signaling.

6. A method as defined in claim 3 wherein utilizing at least one of the first or second neighbor cell information (220A-B, 225A-B, 230A-B) in accordance with the indicator (235B) comprises performing cell reselection to a first cell in the first neighbor cell information (220A, 225A, 230A) when the indicator (235B) indicates to combine the first and second neighbor cell information (220A-B, 225A-B, 230A-B) but not when the indicator (235B) indicates to use the second neighbor cell information (220B, 225B, 230B) but not the first neighbor cell information (220A, 225A, 230A).

7. A method as defined in claim 3 wherein utilizing at least one of the first or second neighbor cell information (220A-B, 225A-B, 230A-B) in accordance with the indicator (235B) comprises reporting a measurement associated with a first cell in the first neighbor cell information (220A, 225A, 230A) when the indicator (235B) indicates to combine the first and second neighbor cell information (220A-B, 225A-B, 230A-B) but not when the indicator (235B) indicates to use the second neighbor cell information (220B, 225B, 230B) but not the first neighbor cell information (220A, 225A, 230A).

8. A method as defined in any one of claims 1 to 3 wherein the first and second neighbor cell information (220A-B, 225A-B, 230A-B) are associated with a first radio access technology (RAT), and wherein utilizing at least one of the first or second neighbor cell information (220A-B, 225A-B, 230A-B) in accordance with the indicator (235B) comprises utilizing none of the first neighbor cell information for the first RAT when the indicator (235B) indicates to use the second neighbor cell information (220B, 225B, 230B) but not the first neighbor cell information (220A, 225A, 230A), and when the second neighbor cell information (220B, 225B, 230B) is empty and the first neighbor cell information (220A, 225A, 230A) is not empty.

9. A method as defined in any one of claims 1 to 3 wherein the first and second neighbor cell information (220A-B, 225A-B, 230A-B) are associated with a first RAT, the broadcast signaling is first broadcast signaling, the non-broadcast signaling is first non-broadcast signaling and the indicator (235B) is a first indicator (235B) associated with the first RAT, and the method further comprises:
receiving third neighbor cell information associated with a second RAT via second broadcast signaling;
receiving fourth neighbor cell information associated with the second RAT via second non-broadcast signaling;
receiving a second indicator indicating whether to (1) use the third and fourth neighbor cell information for the second RAT, or (2) use the fourth neighbor cell information but not the third neighbor cell information for the second RAT; and
utilizing at least one of the third or fourth neighbor cell information for the second RAT in accordance with the second indicator.

10. A method as defined in any one of claims 1 to 3 wherein the broadcast signaling comprises a system information message to convey the first neighbor cell information (220A, 225A, 230A), and the non-broadcast signaling comprises at least one of a packet measurement order message or a packet cell change order message to convey the second neighbor cell information (220B, 225B, 230B) and the indicator (235B).

11. A computer readable medium storing computer readable instructions which, when executed, cause a computer to perform the method of any one of claims 1 to 10.

12. A mobile station (105) comprising a processor programmed to perform the method of any one of claims 1 to 10.

## Patentansprüche

1. Ein Verfahren in einer drahtlosen Vorrichtung (105), das aufweist:
Empfangen einer ersten Nachbarzelle-Information (220A, 225A, 230A) über eine Broadcast-Signalisierung von einer versorgenden Zelle (110);
Empfangen einer zweiten Nachbarzelle-Information (220B, 225B, 230B) über eine Nicht-Broadcast-Signalisierung von derselben versorgenden Zelle (110);
Empfangen eines Indikators (235B), der angibt, ob (1) die erste und zweite Nachbarzelle-Information (220A-B, 225A-B, 230A-B) zu verwenden ist oder (2) die zweite Nachbarzelle-Information (220B, 225B, 230B), aber nicht die erste Nachbarzelle-Information (220A, 225A, 230A) zu verwenden ist; und
Verwenden zumindest einer der ersten oder zweiten Nachbarzelle-Information (220A-B, 225A-B, 230A-B) in Übereinstimmung mit dem Indikator (235B).

2. Ein Verfahren gemäß Anspruch 1, wobei der Indikator (235B) über die Nicht-Broadcast-Signalisierung empfangen wird.

3. Ein Verfahren gemäß Anspruch 1 oder 2, wobei der Indikator (235B) angibt, ob (1) die erste und zweite Nachbarzelle-Information (220A-B, 225A-B, 230A-B) zu kombinieren ist oder (2) die zweite Nachbarzelle-Information (220B, 225B, 230B), aber nicht die erste Nachbarzelle-Information (220A, 225A, 230A) zu verwenden ist.

4. Ein Verfahren gemäß Anspruch 3, wobei ein Verwenden zumindest einer der ersten oder zweiten Nachbarzelle-Information (220A-B, 225A-B, 230AB) in Übereinstimmung mit dem Indikator (235B) aufweist:
Kombinierten der ersten und zweiten Nachbarzelle-Information (220A-B, 225A-B, 230A-B), wenn der Indikator (235B) angibt, die erste und zweite Nachbarzelle-Information (220A-B, 225A-B, 230A-B) zu kombinieren; und
Verwenden der zweiten Nachbarzelle-Information (2208, 225B, 230B), aber nicht der ersten Nachbarzelle-Information, wenn der Indikator (235B) angibt, die zweite Nachbarzelle-Information (220B, 225B, 230B), aber nicht die erste Nachbarzelle-Information (220A, 225A, 230A) zu verwenden.

5. Ein Verfahren gemäß Anspruch 4, wobei das Kombinierten der ersten und zweiten Nachbarzelle-Information (220A-B, 225A-B, 230A-B) aufweist ein Priorisieren der zweiten Nachbarzelle-Information (220B, 225B, 230E3), die über die Nicht-Broadcast-Signalisierung empfangen wird, über die erste Nachbarzelle-Information (220A, 225A, 230A), die über die Broadcast-Signalisierung empfangen wird.

6. Ein Verfahren gemäß Anspruch 3, wobei das Verwenden von zumindest einer der ersten oder zweiten Nachbarzelle-Information (220A-B, 225A-B, 230A-B) in Übereinstimmung mit dem Indikator (235B) aufweist ein Durchführen einer Zellen-Neuauswahl zu einer ersten Zelle in der ersten Nachbarzelle-Information (220A, 225A, 230A), wenn der Indikator (235B) angibt, die erste und zweite Nachbarzelle-Information (220A-B, 225A-B, 230AB) zu kombinieren, aber nicht, wenn der Indikator (235B) angibt, die zweite Nachbarzelle-Information (220B, 225B, 230B), aber nicht die erste Nachbarzelle-Information (220A, 225A, 230A) zu verwenden.

7. Ein Verfahren gemäß Anspruch 3, wobei das Verwenden von zumindest einer der ersten oder zweiten Nachbarzelle-Information (220A-B, 225A-B, 230A-B) in Übereinstimmung mit dem Indikator (235B) aufweist ein Berichten einer Messung, die mit einer ersten Zelle in der ersten Nachbarzelle-Information (220A, 225A, 230A) assoziiert ist, wenn der Indikator (235B) angibt, die erste und zweite Nachbarzelle-Information (220A-B, 225A-B, 230A-B) zu kombinieren, aber nicht, wenn der Indikator (235B) angibt, die zweite Nachbarzelle-Information (220B, 225B, 230B), aber nicht die erste Nachbarzelle-Information (220A, 225A, 230A) zu verwenden.

8. Ein Verfahren gemäß einem der Ansprüche 1 bis 3, wobei die erste und die zweite Nachbarzelle-Information (220A-B, 225A-B, 230A-B) mit einer ersten Funkzugangstechnologie (RAT - radio access tech nology) assoziiert sind, und wobei das Verwenden von zumindest einer der ersten oder zweiten Nachbarzelle-Information (220A-B, 225A-B, 230A-B) in Übereinstimmung mit dem Indikator (235B) aufweist ein Verwenden keiner der ersten Nachbarzelle-Information für die erste RAT, wenn der Indikator (235B) angibt, die zweite Nachbarzelle-Information (220B, 225B, 230B), aber nicht die erste Nachbarzelle-Information (220A, 225A, 230A) zu verwenden, und wenn die zweite Nachbarzelle-Information (220B, 2258, 2301B) leer ist und die erste Nachbarzelle-Information (220A, 225A, 230A) nicht leer ist.

9. Ein Verfahren gemäß einem der Ansprüche 1 bis 3, wobei die erste und die zweite Nachbarzelle-Information (220A-B, 225A-B, 230A-B) mit einer ersten RAT assoziiert sind, die Broadcast-Signalisierung eine erste Broadcast-Signalisierung ist, die Nicht-Broadcast-Signalisierung eine erste Nicht-Broadcast-Signalisierung ist und der Indikator (235B) ein erster Indikator (235B) ist, der mit der ersten RAT assoziiert ist, und das Verfahren weiter aufweist:
Empfangen einer dritten Nachfaarzelle-Information, die mit einer zweiten RAT assoziiert ist, über eine zweite Broadcast-Signalisierung;
Empfangen einer vierten Nachbarzelle-Information, die mit der zweiten RAT assoziiert ist, über eine zweite Nicht-Broadcast-Signalisierung;
Empfangen eines zweiten Indikators, der angibt, ob (1) die dritte und vierte Nachbarzelle-Information für die zweite RAT zu verwenden ist, oder (2) die vierte Nachbarzelle-Information, aber nicht die dritte Nachbarzelle-Information für die zweite RAT zu verwenden ist; und
Verwenden zumindest einer der dritten oder vierten Nachbarzelle-Information für die zweite RAT in Übereinstimmung mit dem zweiten Indikator.

10. Ein Verfahren gemäß einem der Ansprüche 1 bis 3, wobei die Broadcast-Signalisierung eine Systeminformationsnachricht aufweist zum Übermitteln der ersten Nachbarzelle-Information (220A, 225A, 230A), und die Nicht-Broadcast-Signalisierung zumindest eine aus einer Paket-Mess-Reihenfolge- Nachricht oder einer Paket-Zelfe-Änderungs-Reihenfolge-Nachricht aufweist zum Übermitteln der zweiten Nachbarzelle-Information (220B, 225B, 230B) und des Indikators (235B).

11. Ein computerlesbares Medium, das computerlesbare Anweisungen speichert, die bei Ausführung einen Computer veranlassen, das Verfahren gemäß einem der Ansprüche 1 bis 10 durchzuführen.

12. Eine mobile Station (105), die einen Prozessor aufweist, der programmiert ist zum Durchführen des Verfahrens gemäß einem der Ansprüche 1 bis 10.

## Revendications

1. Procédé dans un dispositif sans fil (105) comprenant :
la réception de premières informations de cellule voisine (220A, 225A, 230A) via une signalisation de diffusion en provenance d'une cellule de desserte (110) ;
la réception de deuxièmes informations de cellule voisine (220B, 225B, 230B) via une signalisation de non-diffusion en provenance de la même cellule de desserte (110) ;
la réception d'un indicateur (235B) indiquant si (1) les premières et deuxièmes informations de cellule voisine (220A-B, 225A-B, 230A-B) sont à utilisées, ou (2) les deuxièmes informations de cellule voisine (220B, 225B, 230B) mais pas les premières informations de cellule voisine (220A, 225A, 230A) sont à utiliser ; et
l'utilisation d'au moins les premières ou les deuxièmes informations de cellule voisine (220A-B, 225A-B, 230A-B) conformément à l'indicateur (235B).

2. Procédé selon la revendication 1, dans lequel l'indicateur (235B) est reçu via la signalisation de non-diffusion.

3. Procédé selon la revendication 1 ou 2, dans lequel l'indicateur (235B) indique si (1) les premières et deuxièmes informations de cellule voisine (220A-B, 225A-B, 230A-B) sont à combiner, ou (2) les deuxièmes informations de cellule voisine (220B, 225B, 230B) mais pas les premières informations de cellule voisine (220A, 225A, 230A) sont à utiliser.

4. Procédé selon la revendication 3, dans lequel l'utilisation d'au moins les premières ou les deuxièmes informations de cellule voisine (220A-B, 225A-B, 230A-B) conformément à l'indicateur (235B) comprend :
la combinaison des premières et deuxièmes informations de cellule voisine (220A-B, 225A-B, 230A-B) lorsque l'indicateur (235B) indique de combiner les premières et deuxièmes informations de cellule voisine (220A-B, 225A-B, 230A-B) ; et
l'utilisation des deuxièmes informations de cellule voisine (220B, 225B, 230B) mais pas des premières informations de cellule voisine lorsque l'indicateur (235B) indique d'utiliser les deuxièmes informations de cellule voisine (220B, 225B, 230B) mais pas les premières informations de cellule voisine (220A, 225A, 230A).

5. Procédé selon la revendication 4, dans lequel la combinaison des premières et deuxièmes informations de cellule voisine (220A-B, 225A-B, 230A-B) comprend la priorisation des deuxièmes informations de cellule voisine (220B, 225B, 230B) reçues via la signalisation de non-diffusion sur les premières informations de cellule voisine (220A, 225A, 230A) reçues via la signalisation de diffusion.

6. Procédé selon la revendication 3, dans lequel l'utilisation d'au moins les premières ou les deuxièmes informations de cellule voisine (220A-B, 225A-B, 230A-B) conformément à l'indicateur (235B) comprend l'exécution d'une resélection de cellule pour une première cellule dans les premières informations de cellule voisine (220A, 225A, 230A) lorsque l'indicateur (235B) indique de combiner les premières et deuxièmes informations de cellule voisine (220A-B, 225A-B, 230A-B) mais pas lorsque l'indicateur (235B) indique d'utiliser les deuxièmes informations de cellule voisine (220B, 225B, 230B) mais pas les premières informations de cellule voisine (220A, 225A, 230A).

7. Procédé selon la revendication 3, dans lequel l'utilisation d'au moins les premières ou les deuxièmes informations de cellule voisine (220A-B, 225A-B, 230A-B) conformément à l'indicateur (235B) comprend le rapport d'une mesure associée à une première cellule dans les premières informations de cellule voisine (220A, 225A, 230A) lorsque l'indicateur (235B) indique de combiner les premières et deuxièmes informations de cellule voisine (220A-B, 225A-B, 230A-B) mais pas lorsque l'indicateur (235B) indique d'utiliser les deuxièmes informations de cellule voisine (220B, 225B, 230B) mais pas les premières informations de cellule voisine (220A, 225A, 230A).

8. Procédé selon l'une quelconque des revendications 1 à 3, dans lequel les premières et deuxièmes informations de cellule voisine (220A-B, 225A-B, 230A-B) sont associées à une première technologie d'accès radio (RAT), et dans lequel l'utilisation d'au moins les premières ou les deuxièmes informations de cellule voisine (220A-B, 225A-B, 230A-B) conformément à l'indicateur (235B) comprend l'utilisation d'aucune des premières informations de cellule voisine pour la première RAT lorsque l'indicateur (235B) indique d'utiliser les deuxièmes informations de cellule voisine (220B, 225B, 230B) mais pas les premières informations de cellule voisine (220A, 225A, 230A), et lorsque les deuxièmes informations de cellule voisine (220B, 2258, 230B) sont vides et les premières informations de cellule voisine (220A, 225A, 230A) ne sont pas vides.

9. Procédé selon l'une quelconque des revendications 1 à 3, dans lequel les premières et deuxièmes informations de cellule voisine (220A-B, 225A-B, 230A-B) sont associées à une première RAT, la signalisation de diffusion est une première signalisation de diffusion, la signalisation de non-diffusion est une première signalisation de non-diffusion et l'indicateur (235B) est un premier indicateur (235B) associé à la première RAT, et le procédé comprenant en outre :
la réception de troisièmes informations de cellule voisine associées à une seconde RAT via une seconde signalisation de diffusion ;
la réception de quatrièmes informations de cellule voisine associées à la seconde RAT via une seconde signalisation de non-diftusion ;
la réception d'un second indicateur indiquant si (1) les troisièmes et quatrièmes informations de cellule voisine pour la seconde RAT sont à utiliser, ou (2) les quatrièmes informations de cellule voisine mais pas les troisièmes informations de cellule voisine pour la seconde RAT sont à utiliser ; et
l'utilisation d'au moins les troisièmes ou les quatrièmes informations de cellule voisine pour la seconde RAT conformément au second indicateur.

10. Procédé selon l'une quelconque des revendications 1 à 3, dans lequel la signalisation de diffusion comprend un message d'informations de système pour acheminer les premières informations de cellule voisine (220A, 225A, 230A), et la signalisation de non-diffusion comprend au moins l'un d'un message d'ordre de mesure de paquet ou d'un message d'ordre de changement de cellule de paquet pour acheminer les deuxièmes informations de cellule voisine (220B, 225B, 230B) et l'indicateur (235B).

11. Support lisible par ordinateur stockant des instructions lisibles par ordinateur qui, lorsqu'elles sont exécutées, amènent un ordinateur à effectuer le procédé selon l'une quelconque des revendications 1 à 10.

12. Station mobile (105) comprenant un processeur programmé pour effectuer le procédé selon l'une quelconque des revendications 1 à 10.
